# EUROPEAN PATENT APPLICATION

(11) **EP 1 857 806 A2**
(43) Date of publication of application: **21.11.2007**
(21) Application number: 07107433.0
(22) Date of filing: 03.05.2007
(51) Int. Cl.: G01N 15/14

(54) **Device, method and program for detecting impurities in a fluid**

(30) Priority: 15.05.2006 JP 2006135586
(71) Applicant: OMRON Corporation, a corporation of Japan, Shiokoji-dori, Shimogyo-ku Kyoto-shi Kyoto 600-8530 (JP)
(72) Inventor: Fujii, Toju, 600-8560 Kyoto (JP); Asama, Takashi, 600-8530 Kyoto (JP)
(74) Representative: Vossius & Partner

(57) **Abstract**

There is formerly a problem unable to detect a foreign substance left in a filter by a simplified construction reduced in cost.

A foreign substance detector has a scanner for acquiring image information of the surface of a filtration filter for filtering a fluid: an image information receiving section for receiving the image information outputted from the scanner; a foreign substance information acquiring section for acquiring foreign substance information as information relative to the foreign substance of the surface of the filter from the image information received by the image information receiving section; and an output section for outputting the foreign substance information acquired by the foreign substance information acquiring section.

## Description

The present invention relates to a foreign substance detector for detecting a foreign substance within a fluid, etc.

A liquid and gas used in liquid washing and air washing of a product are formerly filtered by a filter so that a foreign substance such as a resin piece, a metallic piece, etc. mixed into the liquid and the gas is separated. Thus, since the foreign substance can be detected, it is judged whether or not the product is normally manufactured on a manufacture line, etc. by examining a generating situation of the foreign substance.

As a method for inspecting the foreign substance, etc. such as a resin piece, a metallic piece, etc. mixed into such a fluid such as a liquid, etc., for example, the following method, etc. are known (e.g., patent literature 1). Namely, in this method, a liquid-shaped substance such as water, etc. used in washing, etc. is filtered by the filter in a manufacture process of the product. The image of a surface of this filter is picked up by a CCD (Charge Coupled Devices) camera. Image processing, etc. are performed with respect to image information obtained as its pickup image result so that the foreign substance is inspected.

In such a method, the CCD camera able to be two-dimensionally moved is moved on the filter as an inspecting object. The filter is partitioned in a unit finely divided longitudinally and transversally, and is photographed plural times. Image information obtained by these photographings is image-processed so that the foreign substance is detected.

Patent literature 1: JP-A-2005-221291 (first page, Fig. 1, etc.)

However, in the CCD camera used in the former foreign substance detecting method, the depth of a photographed field of the pickup image is deep and the image of high resolution can be acquired. However, a photographable visual field is narrow. Therefore, it is necessary to partition the filter in the unit finely divided longitudinally and transversally, and photograph the image. Therefore, it is necessary to overlap and photograph an adjacent area, and raise positioning accuracy with respect to a photographing portion so as not to generate an area not photographed. However, it is necessary to attach a servo motor, a position detector, etc. to a stage for arranging the CCD camera and the filter, etc. so as to improve such positioning accuracy. Therefore, problems exist in that a device used in detection becomes complicated, and manufacture cost of the device is raised.

A problem also exists in that it is necessary to repeat the movement and positioning, etc. of the CCD camera, etc. every photographing, and time and labor are taken in photographing.

Further, when the foreign substance existing across plural areas finely divided and photographed is detected, a problem exists in that each foreign substance is counted as a separate foreign substance in each image information, and no accurate detecting result of the foreign substance can be obtained. Further, processing using software is newly required to detect the foreign substance lying across such plural areas as one foreign substance, and add-up the area of the foreign substance. Therefore, it is considered that processing becomes complicated.

A foreign substance detector of the present invention detects a foreign substance attached to the surface of a filter for filtering a fluid, and comprises:
a scanner for acquiring image information of the surface of the filter:
an image information receiving section for receiving the image information outputted from the scanner;
a foreign substance information acquiring section for acquiring foreign substance information as information relative to the foreign substance of the surface of the filter from the image information received by the image information receiving section; and
an output section for outputting the foreign substance information acquired by the foreign substance information acquiring section.

In accordance with such a construction, the foreign substance left in the filter can be detected by a simplified construction reduced in cost by using e.g., a scanner having a general purpose property and cheaply manufactured. Further, it is not necessary to acquire plural image information from the filter while positioning is performed every time. Accordingly, time and labor at a foreign substance detecting time can be reduced.

Further, in the foreign substance detector of the present invention, the foreign substance information acquiring section in the above foreign substance detector has:
a foreign substance detecting means for detecting the foreign substance of the surface of the filter from the image information received by the image information receiving section; and
a foreign substance information acquiring means for acquiring the foreign substance information with respect to the foreign substance detected by the foreign substance detecting means.

In accordance with such a construction, the foreign substance left in the filter can be detected by a simplified construction reduced in cost. Further, it is not necessary to acquire plural image information from the filter while positioning is performed every time. Accordingly, time and labor at the foreign substance detecting time can be reduced.

A foreign substance detecting method of the present invention detects a foreign substance attached to the surface of a filter for filtering a fluid, and comprises:
an acquiring step for acquiring image information of the surface of the filter by using a scanner;
an image information receiving step for receiving the image information acquired in the acquiring step;
a foreign substance information acquiring step for acquiring foreign substance information as information relative to the foreign substance of the surface of the filter from the image information received in the image information receiving step; and
an output step for outputting the foreign substance information acquired in the foreign substance information acquiring step.

In accordance with such a construction, the foreign substance left in the filter can be detected by a simplified construction reduced in cost by using e.g., a scanner having a general purpose property and cheaply manufactured. Further, it is not necessary to acquire plural image information from the filter while positioning is performed every time. Accordingly, time and labor at a foreign substance detecting time can be reduced.

Further, in the foreign substance detecting method of the present invention, the foreign substance information acquiring step in the above foreign substance detecting method has:
a first step for detecting the foreign substance of the surface of the filter from the image information received by the image information receiving step; and
a second step for acquiring the foreign substance information with respect to the foreign substance detected by the first step.

In accordance with such a construction, the foreign substance left in the filter can be detected by a simplified construction reduced in cost. Further, it is not necessary to acquire plural image information from the filter while positioning is performed every time. Accordingly, time and labor at the foreign substance detecting time can be reduced.

Further, in the foreign substance detecting method of the present invention, the foreign substance information including a counting result of the number of the foreign substances is acquired in the second step in the above foreign substance detecting method.

In accordance with such a construction, a generating situation of the foreign substance can be accurately known, and e.g., an abnormality, etc. on a manufacture line can be grasped.

Further, in the foreign substance detecting method of the present invention, the foreign substance information including shape information as information relative to the shape of the foreign substance is acquired in the second step in the above foreign substance detecting method.

In accordance with such a construction, it is possible to grasp a shape of the foreign substance which is generated. For example, it is also possible to grasp an abnormal portion of the manufacture line, etc. from the generated foreign substance.

Further, in the foreign substance detecting method of the present invention, the foreign substance information including a counting result of the number of foreign substances every each classification in a classifying case of the foreign substance every the shape information is acquired in the second step in the above foreign substance detecting method.

In accordance with such a construction, the kind and generating frequency of the foreign substance can be accurately grasped by the shape of the foreign substance. For example, it is also possible to accurately grasp an abnormal portion of the manufacture line, etc.

Further, in the foreign substance detecting method of the present invention, the foreign substance information including color information as information relative to a color of the foreign substance is acquired in the second step in the above foreign substance detecting method.

In accordance with such a construction, it is possible to grasp a color of the foreign substance which is generated. For example, it is also possible to grasp an abnormal portion of the manufacture line, etc. from the generated foreign substance.

Further, in the foreign substance detecting method of the present invention, the foreign substance information including a counting result of the number of foreign substances every each classification in a classifying case of the foreign substance every the color information is acquired in the second step in the above foreign substance detecting method.

In accordance with such a construction, the kind and generating frequency of the foreign substance can be accurately grasped by the color of the foreign substance. For example, it is also possible to accurately grasp an abnormal portion of the manufacture line, etc.

Further, in the foreign substance detecting method of the present invention, the foreign substance information including shape information as information relative to the shape of the foreign substance, and color information as information relative to a color of the foreign substance is acquired in the second step in the above foreign substance detecting method.

In accordance with such a construction, it is possible to grasp the color and shape of the foreign substance which are generated. For example, it is also possible to grasp an abnormal portion of the manufacture line, etc. from the generated foreign substance.

Further, in the foreign substance detecting method of the present invention, the foreign substance information including a counting result of the number of foreign substances every each classification in a classifying case of the foreign substance with respect to the shape information and the color information is acquired in the second step in the above foreign substance detecting method.

In accordance with such a construction, the kind and generating frequency of the foreign substance can be accurately grasped by the shape of the foreign substance, the color of the foreign substance or these combination. For example, it is also possible to accurately grasp an abnormal portion of the manufacture line, etc.

Further, in the foreign substance detecting method of the present invention, information of resolution of the scanner is acquired, and information relative to the actual size of the foreign substance is calculated by using the information of the resolution, and the foreign substance information including the calculated information is acquired in the second step in the above foreign substance detecting method.

In accordance with such a construction, the actual size of the foreign substance can be easily grasped. Thus, the size of the foreign substance, etc. can be evaluated in a unit easily sensitively understood. Therefore, foreign substance mixture can be accurately evaluated. Further, with respect to the foreign substance on the filter detected by the scanner different in resolution, a comparison evaluation can be also made in the same unit.

In accordance with the foreign substance detector, etc. in the present invention, the foreign substance left in the filter can be detected by a simplified construction reduced in cost.

Further, in accordance with the foreign substance detector, etc. in the present invention, time and labor at the foreign substance detecting time can be reduced.

Fig. 1 is a block diagram of a foreign substance detector in embodiment mode 1.

Fig. 2 is a flow chart for explaining the operation of the foreign substance detector.

Fig. 3 is a typical view of the foreign substance detector.

Fig. 4 is a view showing a display example of image information obtained by reading-out the image of a filter by a scanner.

Fig. 5 is a view showing a display example of a binarized image obtained by dynamic binarization processing.

Fig. 6 is a view showing a foreign substance information list.

Embodiment modes of a foreign substance detector, etc. will next be explained with reference to the drawings. Constructional elements designated by the same reference numerals in the embodiment modes perform similar operations, and their second explanations are therefore omitted in a certain case.

### (Embodiment mode)

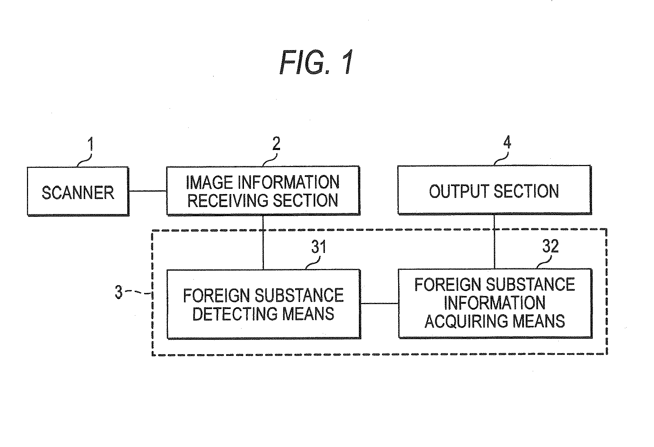

Fig. 1 is a block diagram of a foreign substance detector in this embodiment mode.

The foreign substance detector has a scanner 1, an image information receiving section 2, a foreign substance information acquiring section 3 and an output section 4. The foreign substance information acquiring section 3 has a foreign substance detecting means 31 and a foreign substance information acquiring means 32.

The scanner 1 acquires image information of the surface of a filter. Concretely, while one or more image pickup elements are moved along the surface of a photographed subj ect, here, the filter, the scanner 1 reads reflected light or transmitted light of light irradiated to the photographed subject by each image pickup element. Thus, the scanner 1 reads the image of the photographed subject surface, and converts this image into image information. In general, in the scanner 1, image information of the entire filter 200 can be acquired by merely moving the image pickup element within the scanner 1 along the surface of the filter 200 normally one time, or a few times in a certain case. Therefore, it is not necessary to move a relative position relation of the filter as the photographed subject and the scanner 1. Further, time required to acquire the image information can be set to a short time, and a position shift, etc. are not generated within the obtained image. The image information outputted from the scanner 1 is normally digital data, but may be also analog data. Further, a file format, etc. of the image information is not cared, etc. The scanner 1 is preferably a scanner of a reflection type for reading reflected light of light irradiated to the photographed subject. However, the scanner 1 may be also a scanner of a transmission type for reading transmitted light of the light irradiated to the photographed subject in accordance with the material, color, etc. of the filter. Reading-out width and length of the photographed subject of the scanner 1 are preferably a width and a length greater than those of the filter as the photographed subject. A scanner for upwardly locating a reading face for reading the photographed subject is normally used as the scanner 1, but a scanner for downwardly locating the reading face may be also used. Here, a case using a scanner for moving no position of the filter as the photographed subject and no position of the scanner 1 at an image reading time, e.g., a so-called flat bed scanner, etc. will be particularly explained as the scanner 1. The scanner 1 has a driver, etc. within the self device, and may read an image in accordance with control using this driver, etc., and may also read the image in accordance with control using the driver, etc. arranged in the image information receiving section 2, etc. described later. In the scanner 1, resolution of the read-out image can be designated. For example, the scanner 1 can read-out the image in resolution set in advance. The resolution of the scanner 1 depends on the size of a foreign substance as a detecting object, but is preferably 2400 dpi (dot per inch) or more, and is more preferably 4800 dpi or more. For example, when the size of the foreign substance desirous to be detected is about 50 µm, and this foreign substance is read in the resolution of 4800 dpi, the size per one pixel becomes about 5 µm. Accordingly, it is understood that the foreign substance can be sufficiently detected. The scanner 1 may be a color scanner and may be also a black and white scanner. Further, no gradation number of the image read by the scanner 1 may be cared. For example, the image read by the scanner 1 may be a black and white image of two gradations, and may be also a gray scale image of 256 gradations, and may be also a full color image. The basic structure of the scanner 1, a reading operation of the image, etc. are a publicly known technique, and their explanations are therefore omitted.

Here, the filter may be any filter if it is possible to filter the foreign substance from a fluid, i.e., a liquid such as water, etc., and gas such as air, etc. Further, the size, thickness, etc. of the filter are not cared. For example, the filter may be constructed by any material such as nonwoven fabric, woven fabric, a sponge, etc. The size, material, etc. of the filter are set in accordance with uses. Here, the foreign substance is detected from image information of the surface of the filter read-out by the scanner 1. Therefore, the color of the filter is preferably a color for easily distinguishing the foreign substance, e.g., a color greatly different in chroma, coloring, brightness, etc. with respect to the foreign substance supposed so as to be separated by the filter.

The image information receiving section 2 receives image information outputted from the scanner 1. The image information receiving section 2 may also accumulate the received image information to an unillustrated memory, a hard disk, etc. The image information receiving section 2 may have the driver of the scanner 1 as an input means and may not have this driver. For example, an input received by the image information receiving section 2 is an input, etc. using wired or wireless communication from the scanner, and the input means may be any input means. The image information receiving section 2 can be realized by MPU (micro processing unit) and a memory, the driver of the scanner 1, a signal receiving device, etc. of wired or wireless communication of a USB interface card or an IEEE 1394 interface card, etc.

The foreign substance information acquiring section 3 acquires foreign substance information as information relative to the foreign substance of the surface of the filter from the image information received by the image information receiving section 2. The information relative to the foreign substance may be concretely information able to show that one or more foreign substances exist, and may be also information of the number of foreign substances and position shown in the image information. The information relative to the foreign substance may be also shape information as information relative to the shape of the foreign substance such as an area, a major axis, a minor axis, a perimeter, a circle corresponding diameter, a circle degree, an aspect ratio, etc. The aspect ratio is a ratio of the major axis and the minor axis, and is here a value provided by dividing the value of the major axis by the value of the minor axis. Further, the information relative to the foreign substance may be also information relative to a color such as density of the foreign substance shown by the image information, RGB values, i.e., red, green and blue values, a hue, chroma, brightness, etc. Further, the information relative to the foreign substance may also include one or more of these information. Further, the information relative to the foreign substance may also include a counting result of the number of foreign substances every each classification when the foreign substance is classified every these shape information and color information. Here, the case that the foreign substance information acquiring section 3 is constructed by a foreign substance detecting means 31 and a foreign substance information acquiring means 32 will be explained. However, other techniques can be also utilized if these techniques are techniques able to acquire the information relative to the foreign substance from the image information. The foreign substance information acquiring section 3 can be normally realized from MPU, a memory, etc. A processing procedure of the foreign substance information acquiring section is normally realized by software, and this software is recorded to a recording medium such as ROM, etc. However, this processing procedure may be also realized by hardware (dedicated circuit).

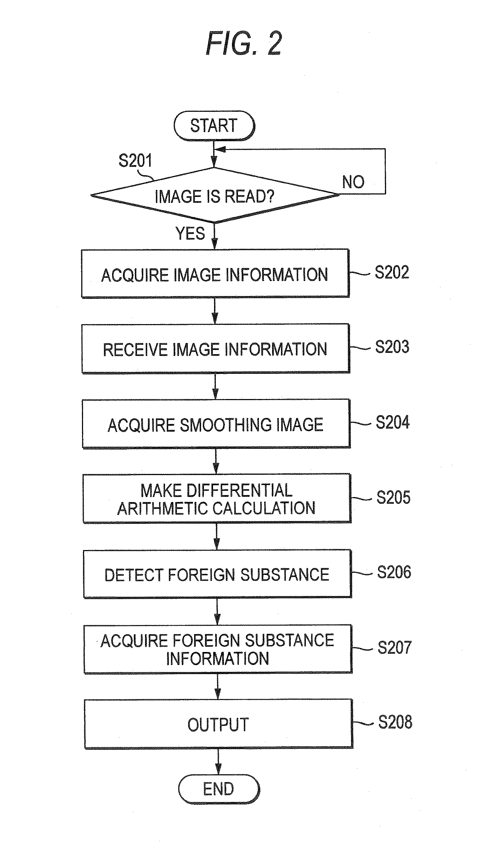

The foreign substance detecting means 31 detects the foreign substance of the surface of the filter from the image information received by the image information receiving section 2. The detection of the foreign substance described here is to set a state able to discriminate at least the foreign substance and a substance except for the foreign substance. Concretely, in the image information, it is to set a state able to discriminate an area of the foreign substance and an area except for the foreign substance. Further, in addition to this, information for designating the position of the foreign substance may be also acquired, and discriminating information such as a label, etc. may be also given to the foreign substance. For example, the foreign substance detecting means 31 may convert the image information of multiple gradations received by the image information receiving section 2, e.g., the image information of a color and a gray scale into image information of a binary value of white and black by a predetermined threshold value, and may be also set to be able to discriminate a portion displayed in white or black as the position of the foreign substance. Processing for converting such image information of the color and the gray scale into the image information of the binary value of white and black is a publicly known technique, and its explanation is therefore omitted. A detailed example of processing of the foreign substance detecting means 31 in this embodiment mode will be described later by using Fig. 2. Processing able to select a portion and an area of an image different from that of a background from the image information generally known, processing able to display the portion of the image different from that of the background in a color different from that of the background, etc. can be utilized as processing for detecting the foreign substance by using the image information. Processing for distinguishing the area of the foreign substance, etc. as mentioned above, and processing for giving the label with respect to the foreign substance able to be discriminated are publicly known techniques, and their explanations are therefore omitted. The foreign substance detecting means 31 can be normally realized from MPU, a memory, etc. A processing procedure of the foreign substance detecting means 31 is normally realized by software, and this software is recorded to a recording medium such as ROM, etc. However, this processing procedure may be also realized by hardware (dedicated circuit).

The foreign substance information acquiring means 32 acquires foreign substance information with respect to the foreign substance detected by the foreign substance detecting means 31. For example, the foreign substance information acquiring means 32 acquires the foreign substance information including a counting result of the number of foreign substances. For example, the number of foreign substances is counted by counting the number of foreign substances detected by the foreign substance detecting means 31 in the image information. Further, the foreign substance information acquiring means 32 acquires foreign substance information including shape information as information relative to the shape of the above foreign substance. For example, the foreign substance information acquiring means 32 can acquire the shape information such as the size, area, etc. of the foreign substance by counting the number of connected pixels, etc. with respect to pixels connected in the image information among pixels detected as the foreign substance by the foreign substance detecting means 31. Processing, etc. for detecting a pixel having a predetermined continuous attribute from the image information are a publicly known technique, and their explanations are therefore omitted. Further, the foreign substance information acquiring means 32 may count the number of foreign substances every each classification when the foreign substance is classified every shape information in this way, and may also acquire the foreign substance information including this counting result. Further, for example, the foreign substance information acquiring means 32 acquires foreign substance information including color information as information relative to the color of the foreign substance detected by the foreign substance detecting means 31. For example, the foreign substance information acquiring means 32 can acquire color information of the foreign substance by counting an average value of the color information of connected pixels with respect to pixels connected in the image information among pixels detected as the foreign substance by the foreign substance detecting means 31. Further, the foreign substance information acquiring means 32 may count the number of foreign substances every each classification when the foreign substance is classified every color information in this way, and may also acquire foreign substance information including this counting result. Further, the foreign substance information acquiring means 32 may also acquire foreign substance information including both the shape information and the color information. Further, the foreign substance information acquiring means 32 may also acquire foreign substance information including a counting result of the number of foreign substances every each classification when the foreign substance is classified with respect to these shape information and color information. At this time, for example, both the color information and the shape information may be also set so as to count the number of foreign substances satisfying a predetermined condition. Further, the foreign substance information acquiring means 32 may acquire information of resolution of the scanner 1, and may calculate information relative to the actual size of the foreign substance by using this information of resolution, and may also acquire foreign substance information including this calculated information. For example, the size per each pixel of the image information can be calculated from the information of resolution of the scanner. Therefore, the actual size of the foreign substance, e.g., the actual area, a major axis, a minor axis, a perimeter, etc. may be also calculated by using the above shape information from information of this size per each pixel. In the foreign substance information acquiring means 32, a method, etc. for acquiring the information of resolution of the scanner 1 are not cared. For example, the scanner 1 may add the information of resolution in reading-out an image to the image information, and may output this added image information, and the foreign substance information acquiring means 32 may also read-out the information of resolution added to this image information from the image information. Further, the foreign substance information acquiring means 32 may also acquire the information of resolution by suitably reading-out information for setting resolution at a reading-out time of the image information from the driver of the scanner 1, etc. The foreign substance information acquiring means 32 can be normally realized from MPU, a memory, etc. A processing procedure of the foreign substance information acquiring means 32 is normally realized by software, and this software is recorded to a recording medium such as ROM, etc. However, the processing procedure may be also realized by hardware (dedicated circuit).

The output section 4 outputs the foreign substance information acquired by the foreign substance information acquiring section 3. Here, the output section 4 particularly outputs the foreign substance information acquired by the foreign substance information acquiring means 32. The output described here is a concept including display to a display, printing to paper, etc. using a printer, signal transmission to an external device, etc. The output section 4 may be considered so as to include an output device of the display, etc. , and may be also considered so as not to include this output device of the display, etc. The output section can be realized by driver software of the output device, or the driver software of the output device and the output device, etc.

Next, the operation of the foreign substance detector will be explained by using the flow chart of Fig. 2.

(Step S201) The scanner 1 judges whether it is timing for reading an image or not. It is not cared to judge whether the scanner 1 performs reading-out of the image in which timing or not. For example, the image may be read when instructions for reading-out the image are received from another processing section and a user through an unillustrated receiving section, etc. The image may be also read with turning-on of electric power, etc. of the scanner 1, etc. as a trigger. When it is timing for reading-out the image, it proceeds to step S202. In contrast to this, when it is no reading-out timing, it is returned to step S201. When the image information receiving section 2 has the driver of the scanner 1, the image information receiving section 2 may perform this processing.

(Step S202) The scanner 1 reads the image of the surface of a filter, and acquires image information. The scanner 1 then outputs the acquired image information. For example, the scanner 1 reads the image of the surface of the filter placed in a reading position of the image of the scanner 1, and constructs the image information so that the scanner 1 acquires the image information. The scanner 1 outputs this image information to the image information receiving section 2. Processing for reading-out the image by the scanner 1 and acquiring the image information is a publicly known technique and its detailed explanation is therefore omitted.

(Step S203) The image information receiving section 2 receives the image information transmitted from the scanner 1.

(Step S204) The foreign substance detecting means 31 acquires a smoothing image by using the image information received by the image information receiving section 2. The smoothing image is an image in which brightness, etc. of each pixel constituting the image are smoothly leveled. One example of processing for obtaining the smoothing image will be concretely explained. The foreign substance detecting means 31 calculates an average value of brightness of pixels around each pixel with respect to each pixel of the image information. If the image information received by the image information receiving section 2 is image information of a gray scale, the foreign substance detecting means 31 acquires a gray scale value as a value showing its gradation as brightness information. If the image information is image information of a color, e. g. , image information of an RGB color model, etc., the foreign substance detecting means 31 may also make a calculation by using e.g., a formula of (0.3xR)+(0.59xG)+(0.11xB) (here, R, G and B are respectively values of gradations of the RGB channels), etc. from the value of gradation of each channel of RGB. Each pixel is respectively replaced with a pixel having this average value of brightness as a value of gradation, and the gray scale image is obtained. Here, this gray scale image is a smoothing image. However, processing except for the above processing may be also used as the processing for obtaining the smoothing image. Further, with respect to the smoothing image, a smoothing image except for the above smoothing image may be also used. A predetermined image, e. g. , an image of the filter before a fluid is filtered, etc. are prepared in advance as the smoothing image, and may be also read out.

(Step S205) The foreign substance detecting means 31 makes a differential arithmetic calculation of the smoothing image acquired in step S204 and the image information received by the image information receiving section 2. The differential arithmetic calculation is concretely an arithmetic calculation for calculating the difference of a value constituting the image information. Concretely, if the received image information of the image information receiving section 2 is image information of the gray scale, the foreign substance detecting means 31 makes the differential arithmetic calculation of the value of gradation of each pixel, and the value of gradation of each pixel of the smoothing image. If the received image information of the image information receiving section 2 is image information of a color, the foreign substance detecting means 31 makes the differential arithmetic calculation of brightness of each pixel and the value of gradation of each pixel of the smoothing image. In this case, if necessary, the brightness of each pixel may be also calculated from the value of gradation of each channel of RGB, etc. as mentioned above.

(Step S206) The foreign substance detecting means 31 detects a foreign substance. Concretely, the foreign substance detecting means 31 compares a result of the differential arithmetic calculation obtained by step S205, and a threshold value set in advance, and judges whether each pixel is a pixel showing the foreign substance or not from the comparing result. For example, if an absolute value of the result of the differential arithmetic calculation and the threshold value are compared, and the absolute value of the result of the differential arithmetic calculation is higher than the threshold value, it is judged that it is a pixel showing the foreign substance. In contrast to this, if the absolute value is lower than the threshold value, it is judged that it is a pixel showing the filter in which no foreign substance exists. In accordance with this judging result, the foreign substance detecting means 31 may construct a binarized image in which the value of each pixel of the received image information of the image information receiving section 2 is changed to a binary value corresponding to a value showing whether this value of each pixel is higher than the threshold value or not. For example, the pixel of the threshold value or more, i.e., the value of a pixel showing the foreign substance is set to "1", and the pixel of a value less than the threshold value, i.e., the value of a pixel showing no foreign substance is set to "0". As explained in step S204 and step S205, processing for making the differential arithmetic calculation of the image information and the smoothing image of this image information, and constructing the image information provided by changing the value of each pixel to one value of binary values in accordance with a comparing result of the absolute value of the result of this differential arithmetic calculation and the threshold value is processing called dynamic binarization processing. The foreign substance detecting means 31 further judges whether pixels showing the foreign substance are connected to each other by using the judging result of each pixel. The foreign substance detecting means 31 then judges that a connecting area of the pixels showing the foreign substance is an area showing one foreign substance. As this result, the foreign substance detecting means 31 can detect the foreign substance on the filter. The foreign substance detecting means 31 may also perform processing for adding discrimination information of labeling processing, etc. to the detected foreign substance, i.e., each area showing the foreign substance. Further, the above threshold value is preferably set by making an experiment, etc. in advance. Further, the above threshold value is preferably changed every time the kind of the filter, e.g., a color, etc. are different, etc. Here, the difference between the image information and the smoothing image provided by smoothing this image is compared to raise accuracy for detecting the foreign substance. However, when no high accuracy is required and it is desirous to reduce a burden of processing and shorten a processing time, etc., the image information may be compared with the threshold value set in advance and it may be also judged whether or not each pixel is a pixel showing the foreign substance from largeness or smallness of a value with respect to its comparison value.

(Step S207) The foreign substance information acquiring means 32 acquires foreign substance information. For example, the foreign substance detecting means 31 acquires foreign substance information showing a foreign substance number by counting the number of areas showing the foreign substance or a label number, etc. given to an area showing each foreign substance in accordance with the detecting result of the foreign substance in step S206. Further, the foreign substance information acquiring means 32 acquires shape information such as the size of each foreign substance, etc. by counting a pixel number, etc. of the area showing each foreign substance in accordance with the detecting result of the foreign substance in step S206. Further, the foreign substance information acquiring means 32 acquires color information of the pixel of the area showing each foreign substance in the received image information of the image information receiving section 2. For example, the foreign substance information acquiring means 32 calculates the color information of each pixel of each area, e.g., an average value of brightness, etc., and sets this average value, etc. to the color information of the foreign substance. Processing for acquiring the shape information, the color information, etc. with respect to a predetermined area from information, etc. of the pixel constituting this predetermined area is a publicly known technique, and its explanation is therefore omitted.

(Step S208) The output section 4 outputs the acquired foreign substance information of the foreign substance information acquiring means 32. For example, the output section 4 may display the acquired foreign substance information of the foreign substance information acquiring means 32 in a display, etc., and may also accumulate the acquired foreign substance information to a memory, etc.

In the flow chart of Fig. 2, processing is terminated by turning-off of electric power and interruption of processing termination.

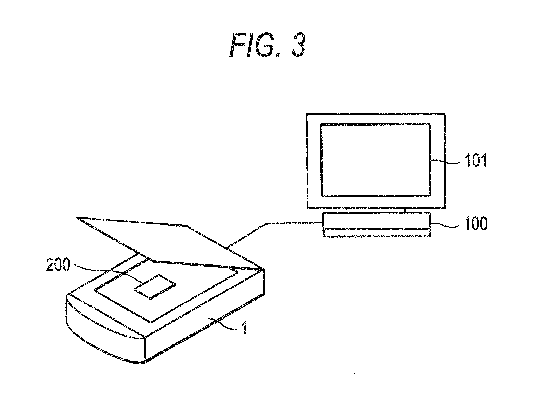

Next, the concrete operation of the foreign substance detector in this embodiment mode will be explained. Fig. 3 is a conceptual view of the foreign substance detector. Here, the foreign substance detector is constructed by the scanner 1 and an information processor 100. Further, the information processor 100 is set to have the image information receiving section 2, the foreign substance information acquiring section 3 and the output section 4. Further, the information processor 100 is set to have a display 101 as an output device. Further, here, the scanner 1 is set to a flat bed scanner of a reflection type for arranging a reading object on a so-called reading face of glass, etc. Further, for example, a maximum readable size of this scanner 1 is transversally set to 210 mm and is longitudinally set to 300 mm. An area of the same size as the filter as a reading object is set to be designated as a reading range in advance.

First, a user arranges the filter 200 desirous to detect a foreign substance on the reading face of the scanner 1. At this time, it is preferable that the filter 200 is arranged in a state stored into a transparent small bag, etc. and a film tape, etc. are stuck to a filter surface so as not to make the reading face of the scanner 1 dirty by the foreign substance attached to the filter 200, a liquid, etc. permeated into the filter 200. For example, the size of the filter 200 is set to a rectangular shape of 4 cm in longitudinal length and 5 cm in transversal length.

Next, when the user gives starting instructions of reading by operating an unillustrated button, a menu, etc., the scanner 1 starts the reading of the surface of the filter 200. When the scanner 1 reads an image of the entire surface of the filter 200, the reading face of the scanner 1 is the size of the filter 200 or more. Therefore, it is not necessary to move relative positions of the filter 200 and the scanner 1. As this result, in comparison with the former technique using a CCD camera, time for reading the image can be greatly shortened. Image information obtained by the reading is then transmitted to the image information receiving section 2. The image information receiving section 2 once accumulates the received image information to a memory, etc., and here displays the image information in the display 101.

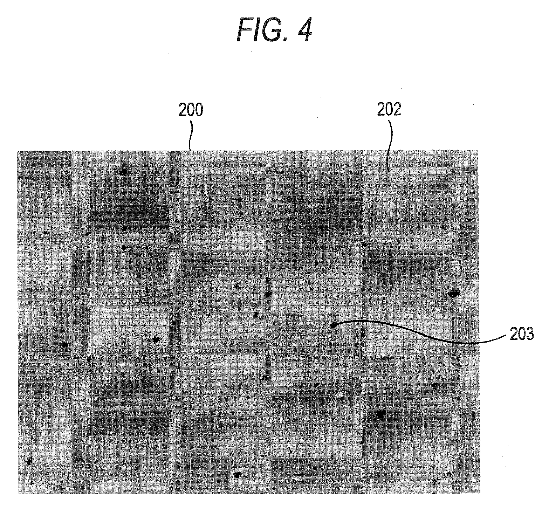

Fig. 4 shows the image information obtained by reading-out the surface of the filter 200 and received by the image information receiving section 2. Here, it is supposed that the image information is image information of a color, and reading resolution of the image information is 4800 dpi. This filter 200 is a filter used in liquid washing of a product, and copper 202, black resin 203, etc. are caught in plural portions as the foreign substance. Here, a case for designating a reading area of the image of the scanner 1 to the same size as the filter as a reading object is explained. However, when the reading size of the image of the scanner 1 is greater than the size of the filter 200, a portion except for the filter 200 among the obtained image information may be also automatically or manually able to be deleted. A construction and processing for deleting an unnecessary portion in this way are a publicly known technique, and their explanations are therefore omitted.

Next, the foreign substance detecting means 31 performs dynamic binarization processing shown as processing of steps S204 to S206 in Fig. 2. Concretely, the differential arithmetic calculation of the image information read by the scanner 1 and a smoothing image of this image information is made. The value of a pixel having a preset threshold value or more with respect to a result of the differential arithmetic calculation is changed to "1", and the value of a pixel having a value less than the threshold value is changed to "0" so that a binarized image is constructed. The pixel having a constant or more difference in color with respect to the filter 200 is extracted as a pixel showing the foreign substance by this dynamic binarization processing.

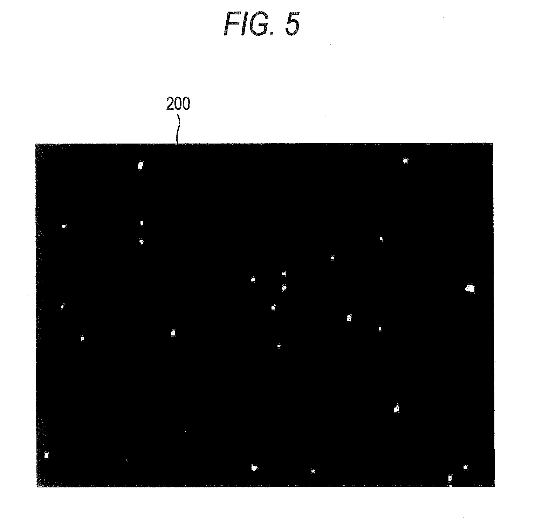

Fig. 5 is a view showing a binarized image obtained by the dynamic binarization processing. In this binarized image, a pixel having a pixel value of "1" is shown as white, and a pixel having a pixel value of "0" is shown as black.

Next, the foreign substance detecting section 31 detects an area showing the foreign substance in the binarized image, i.e., a continuing area of the pixel having a pixel value of "1" in the longitudinal and transversal directions, and gives a label to each area. Concretely, a coordinate showing each area, e.g., the coordinate of a left upper pixel of the area, the coordinate of a right lower pixel, etc. are associated with each other, and information of the label is accumulated. However, the "upper and lower" and the "left and right" described here are determined for convenience, and it is not necessary to conform the "upper and lower" and the "left and right" to the actual upper and lower and left and right of the filter at a using time and a reading time. Processing, etc. for detecting the continuing area of the pixel value in this way are a publicly known technique, and their detailed explanations are therefore omitted.

The foreign substance information processing section 32 acquires foreign substance information with respect to an area showing the foreign substance giving the label thereto by the foreign substance detecting section 31. For example, the foreign substance information processing section 32 acquires information showing the number of foreign substances by counting the number of areas giving labels thereto. Further, with respect to each area giving the label thereto, the number of pixels constituting each area is counted, and the area of the foreign substance is acquired. Further, the number of pixels of an outer circumference of each area is counted, and a perimeter of the foreign substance is acquired. Further, the foreign substance information processing section 32 acquires a major axis and a minor axis of each area. The major axis of each area is set to a maximum length in all projecting directions of each area. The minor axis is set to a maximum length in a direction perpendicular to a direction for obtaining the major axis. Concretely, for example, the foreign substance information processing section 32 counts the number of pixels continued in all the projecting directions with respect to each area, and acquires a maximum pixel number among the obtained pixel numbers as a value of the major axis. Further, the foreign substance information processing section 32 counts the number of pixels continued in a direction perpendicular to the projecting direction obtaining this major axis, and acquires a maximum pixel number among the obtained pixel numbers as a value of the minor axis. Further, a red (R) value, a green (G) value and a blue (B) value of the foreign substance are acquired by calculating respective averages of the red (R) value, the green (G) value and the blue (B) value of the pixel of the image information received by the image information receiving section 2 and corresponding to the pixel within each area of the binarized image.

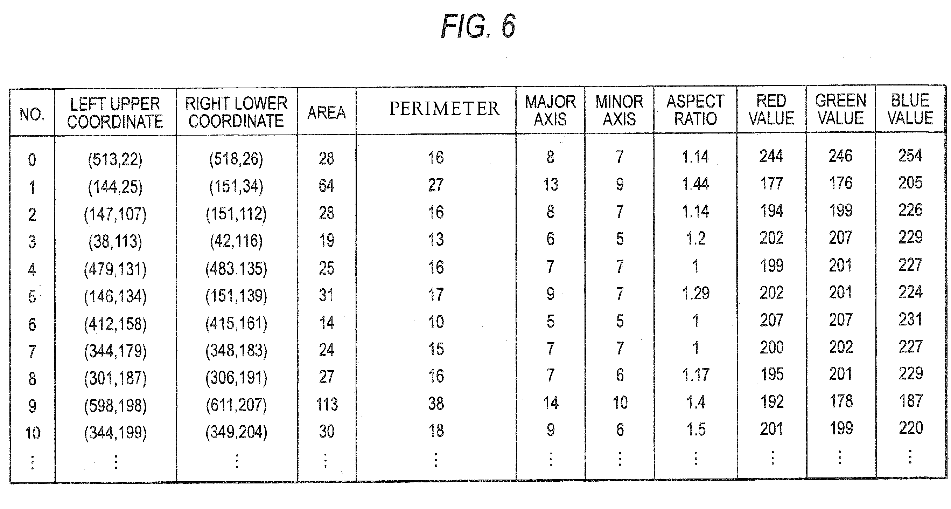

The output section 4 then displays the foreign substance information acquired by the foreign substance information processing section 32 in the display 101. Fig. 6 shows a foreign substance information list for showing the foreign substance information displayed in the display 101. This foreign substance information list has the attributes of "No.", "left upper coordinate", "right lower coordinate", "area", "perimeter", "major axis", "minor axis", "aspect ratio", "red value", "green value" and "blue value". "No." is a label given to an area showing the foreign substance. The "left upper coordinate" and the "right lower coordinate" are a left upper coordinate and a right lower coordinate of the area showing the foreign substance. The coordinate is shown in a pixel unit. Here, for convenience, an uppermost left position of the image of the filter 200 is set to (0, 0) as an origin of the coordinate. Further, the rightward direction from the origin is set to a positive x-axis direction, and the downward direction is set to a positive y-axis direction. The other attributes respectively correspond to the foreign substance information acquired by the foreign substance information processing section 32. Here, the unit is shown by a pixel unit. Further, here, the "red value", the "green value" and the "blue value" are shown as data of 256 gradations. Each line of Fig. 6 is called a record.

A user can know a position of the foreign substance having shape information and color information which is attached in the filter 200 from such a foreign substance information list. For example, it is known that the foreign substance having 28 in area, 16 in perimeter, 8 in major axis, 7 in minor axis, 1.14 in aspect ratio, 194 in red value, 199 in green value and 226 in blue value is attached in a position of (147, 107) in left upper coordinate and (151, 112) in right lower coordinate from the foreign substance information having "2" in "No.".

In the above concrete example, the shape information among the foreign substance information is shown by a value with the pixel as a unit. However, in the scanner 1, differing from the CCD camera, etc., the positions of the reading face and an image pickup element are constant. Accordingly, reading resolution can be normally designated in a driver, etc. Therefore, with respect to the foreign substance detected by the foreign substance detecting means 31, information relative to the actual size may be calculated and the foreign substance information including this calculated information may be also acquired by using information showing the resolution at a reading time of the scanner 1. For example, the information relative to the actual size of the foreign substance may be also acquired by converting the value of the pixel unit shown by the shape information into a value of the actual size of the foreign substance using the information showing the resolution at the reading time of the scanner 1. For example, when the resolution at the reading time of the scanner 1 is set to 4800 dpi and one inch is set to 25 mm for convenience, the longitudinal and transversal lengths of one pixel become about 5 µm. Therefore, the shape information of the actual foreign substance can be obtained by converting the value of the shape information using e.g., this value. For example, in the foreign substance information having "2" in the above "No.", the major axis becomes about 35 µm, and the minor axis becomes about 40 µm.

As mentioned above, in accordance with this embodiment mode, the image information of the surface of the filter 200 is acquired by using the scanner 1. Accordingly, the image information of the entire surface of the filter 200 can be acquired by using e.g., the scanner 1 having a general purpose property and cheaply manufactured without using a device of a complicated structure such as a device for performing positioning, etc. Thus, the foreign substance left in the filter can be detected by a simplified construction reduced in cost.

Further, in accordance with this embodiment mode, the image information of the surface of the filter 200 is acquired by using the scanner 1. Accordingly, the image information of the entire filter 200 can be acquired by merely moving the image pickup element within the scanner 1 along the surface of the filter 200 one time or plural times. Therefore, it is not necessary to repeatedly move the position of the filter 200, the position of the scanner 1, etc. and perform position alignment to acquire the image information of the entire filter 200, and time and labor in detecting the foreign substance can be reduced.

Further, in accordance with this embodiment mode, no image information provided by dividing the filter surface into plural areas as in the former case is acquired. Therefore, it is not necessary to judge whether the foreign substance existing at an end of the image information is one foreign substance or is a different foreign substance displayed across two image information. Accordingly, accuracy of the foreign substance detection is raised, and processing of the foreign substance detection is reduced.

Further, in accordance with this embodiment mode, the image information of the surface of the filter 200 is acquired by using the scanner 1. Accordingly, information relative to the actual shape of the foreign substance such as the actual size of the foreign substance, etc. can be acquired from resolution in reading-out the image of the scanner 1.

Further, distortion, etc. of the shape of a circumferential portion of an image using a lens are not generated as in a CCD camera. Therefore, information relative to the shape of the foreign substance can be accurately acquired.

In the above embodiment mode, the foreign substance information acquiring section 32 of the foreign substance information acquiring section 3 may be omitted, and the foreign substance detecting means 31 may also output information obtained as a detecting result of the foreign substance from the output section 4. For example, the image information of a result of the dynamic binarization processing as shown in Fig. 5 acquired by the foreign substance detecting means 31 may be also outputted as information of a detecting result of the foreign substance from the output section 4.

Further, in the above concrete example, with respect to the list of foreign substance information as shown in Fig. 6, the foreign substance information processing section 32 may sort and narrow a record of the foreign substance information by using one attribute value shown in the list, and the output section 4 may also output its result to the display 101, etc. For example, each record of the foreign substance information may be also sorted such that attribute "perimeter" may be arranged in a raising order of attribute values. Further, for example, only records of the foreign substance information having 30 or more in area may be also displayed by narrowing attribute "area" in a condition of 30 or more. Further, with respect to an attribute designated by a user, etc., a distribution situation every character of the foreign substance may be also displayed by performing histogram display, etc. every attribute value. Otherwise, information (e.g., coordinate information) showing a detecting position of the foreign substance within the image information may be associated and accumulated to the record of each foreign substance information. When the record of the foreign substance information is designated in the list of the foreign substance information as shown in Fig. 6, the image information of the foreign substance corresponding to this record may be also emphasized and displayed by enlargement, coloring, etc. utilizing e.g., the information showing the detecting position of the above foreign substance. Otherwise, the information showing the above detecting position of the foreign substance is utilized, and only the image information of the foreign substance corresponding to the designated record may be also trimmed and displayed by utilizing the information showing the above detecting position of the foreign substance. Further, the image information of the corresponding foreign substance may be also displayed at the center of a display area.

Further, in each of the above embodiment modes, each constructional element may be also constructed by dedicated hardware, or a constructional element able to be realized by software may be also realized by executing a program. For example, each constructional element can be realized by reading-out and executing a software program recorded to a recording medium such as a hard disk, a semiconductor memory, etc. by a program executing section of a CPU, etc. The software for realizing the foreign substance detector in each of the above embodiment modes is a program shown below. Namely, this program is a program for making a computer execute processing for detecting the foreign substance attached to the surface of a filter for filtering a fluid. This program is a program for making the computer execute an image information receiving step, a foreign substance information acquiring step and an output step. In the image information receiving step, the image information of the surface of the above filter acquired by using the scanner is received. In the foreign substance information acquiring step, foreign substance information as information relative to the foreign substance of the surface of the above filter is acquired from the image information received in the above image information receiving step. In the output step, the foreign substance information acquired in the above foreign substance information acquiring step is outputted.

In a signal transmitting step for transmitting information, a signal receiving step for receiving information, etc. in the above program, processing performed by hardware, e.g., processing (processing performed by only hardware) performed by a modem in the signal transmitting step, an interface card, etc. is not included.

Further, this program may be downloaded from a server, etc. and may be also thereby executed. This program may be also executed by reading-out a program recorded to a predetermined recording medium (e.g., an optical disk such as CD-ROM, etc., a magnetic disk, a semiconductor memory, etc.) .

Further, the number of computers for executing this program may be one and may be also plural. Namely, centralized processing may be performed, or distributed processing may be also performed.

In each of the above embodiment modes, each processing (each function) may be realized by performing the centralized processing by a single device (system), or may be also realized by performing the distributed processing by plural devices.

Further, in each of the above embodiment modes, two or more communication means (an image information receiving section, an output section, etc.) existing in one device may be also physically realized by one medium.

The present invention is not limited to the above embodiment modes, but can be variously modified. These modifications are also included within the scope of the present invention.

As mentioned above, the foreign substance detector, etc. in the present invention are suitable as a device for detecting the foreign substance, and are particularly useful as a device, etc. for detecting the foreign substance attached to the filter, etc.

## Claims

1. A foreign substance detector for detecting a foreign substance attached to the surface of a filter for filtering a fluid, and comprising:
a scanner for acquiring image information of the surface of said filter:
an image information receiving section for receiving the image information outputted from said scanner;
a foreign substance information acquiring section for acquiring foreign substance information as information relative to the foreign substance of the surface of said filter from the image information received by said image information receiving section; and
an output section for outputting the foreign substance information acquired by said foreign substance information acquiring section.

2. The foreign substance detector according to claim 1, wherein said foreign substance information acquiring section has:
a foreign substance detecting means for detecting the foreign substance of the surface of said filter from the image information received by said image information receiving section; and
a foreign substance information acquiring means for acquiring said foreign substance information with respect to the foreign substance detected by said foreign substance detecting means.

3. A foreign substance detecting method for detecting a foreign substance attached to the surface of a filter for filtering a fluid, and comprising:
an acquiring step for acquiring image information of the surface of said filter by using a scanner;
an image information receiving step for receiving the image information acquired in said acquiring step;
a foreign substance information acquiring step for acquiring foreign substance information as information relative to the foreign substance of the surface of said filter from the image information received in said image information receiving step; and
an output step for outputting the foreign substance information acquired in said foreign substance information acquiring step.

4. The foreign substance detecting method according to claim 3, wherein said foreign substance information acquiring step has:
a first step for detecting the foreign substance of the surface of said filter from the image information received by said image information receiving step; and
a second step for acquiring said foreign substance information with respect to the foreign substance detected by said first step.

5. The foreign substance detecting method according to claim 4, wherein the foreign substance information including a counting result of the number of said foreign substances is acquired in said second step.

6. The foreign substance detecting method according to claim 4, wherein said foreign substance information including shape information as information relative to the shape of said foreign substance is acquired in said second step.

7. The foreign substance detecting method according to claim 6, wherein the foreign substance information including a counting result of the number of foreign substances every each classification in a classifying case of said foreign substance every said shape information is acquired in said second step.

8. The foreign substance detecting method according to claim 4, wherein said foreign substance information including color information as information relative to a color of said foreign substance is acquired in said second step.

9. The foreign substance detecting method according to claim 8, wherein the foreign substance information including a counting result of the number of foreign substances every each classification in a classifying case of said foreign substance every said color information is acquired in said second step.

10. The foreign substance detecting method according to claim 4, wherein said foreign substance information including shape information as information relative to the shape of said foreign substance, and color information as information relative to a color of said foreign substance is acquired in said second step.

11. The foreign substance detecting method according to claim 10, wherein the foreign substance information including a counting result of the number of foreign substances every each classification in a classifying case of said foreign substance with respect to said shape information and the color information is acquired in said second step.

12. The foreign substance detecting method according to claim 4, wherein information of resolution of said scanner is acquired, and information relative to the actual size of said foreign substance is calculated by using the information of the resolution, and the foreign substance information including the calculated information is acquired in said second step.

13. A program for making a computer execute processing for detecting a foreign substance attached to the surface of a filter for filtering a fluid;
wherein the program makes the computer execute:
an image information receiving step for receiving image information of the surface of said filter acquired by using a scanner;
a foreign substance information acquiring step for acquiring foreign substance information as information relative to the foreign substance of the surface of said filter from the image information received by said image information receiving step; and
an output step for outputting the foreign substance information acquired in said foreign substance information acquiring step.

14. A recording medium recording a program for making a computer execute processing for detecting a foreign substance attached to the surface of a filter for filtering a fluid;
wherein the program makes the computer execute:
an image information receiving step for receiving image information of the surface of said filter acquired by using a scanner;
a foreign substance information acquiring step for acquiring foreign substance information as information relative to the foreign substance of the surface of said filter from the image information received by said image information receiving step; and
an output step for outputting the foreign substance information acquired in said foreign substance information acquiring step.
